# EUROPEAN PATENT SPECIFICATION

(11) **EP 0 448 338 B1**
(45) Date of publication and mention of the grant of the patent: **28.05.1997**
(21) Application number: 91302343.8
(22) Date of filing: 19.03.1991
(51) Int. Cl.: G11B 5/55, G11B 21/08

(54) **A rotary actuator head positioning apparatus and dual pivot apparatus for a disk drive**
Drehbares Kopfantrieb-Positionierungsgerät und Zweiachsengerät für Platteneinheit
Appareil de positionnement de tête avec actionneur rotatif et appareil à double pivot pour une unité à disques

(30) Priority: 22.03.1990 US 497395
(43) Date of publication of application: 25.09.1991
(73) Proprietor: SEAGATE TECHNOLOGY INTERNATIONAL, Georgetown Grand Cayman Island (KY)
(72) Inventor: Bronshvatch, Efim, Saratoga, California 95070 (US)
(74) Representative: Sturt, Clifford Mark

(56) References cited:
- EP-A- 0 314 515
- US-A- 4 642 717
- US-A- 4 722 014
- US-A- 4 881 140

## Description

This invention relates to rotary actuator head positioning apparatus and to dual pivot apparatus for disk drives.

Disk drives record and reproduce information stored on concentric circles or spiral tracks on magnetic or optical disks. Data is stored on the tracks and is written and read by magnetic heads or transducers which must be accurately positioned over one of the tracks on the surface of the disk. The head is supported by a flexure to fly over the surface of the disk, the flexure being incorporated in an actuator which responds to signals from a host computer to position the transducer over a selected track. Both linear and rotary actuators have been used for this purpose, but rotary actuators are especially useful in disk drives with small physical dimensions.

A common form of rotary actuator is a V-shaped dual arm assembly. One arm includes a head arm flexure, and read/write head extending out from a pivot towards the tracks on the disk. Extending towards the pivot to form the V-shaped arm assembly is an actuator arm which is coupled to an actuator motor. Rotation of the motor moves the actuator arm and thereby the entire V-shaped assembly, moving the head from track to track. Such rotary actuator mechanisms require a very stable pivot mechanism to support the actuator arm and head support arm. Any instability will produce serious positioning inaccuracies.

The pivot mechanism in known rotary actuators generally consists of a shaft supporting the juncture of two arms, i.e. an actuator arm coupled to the actuator motor and the head arm. The pivot point of the actuator arm and a head support arm are typically mounted for rotation about this fixed common pivot point. However, assembly of this pivot mechanism is expensive and time consuming to accomplish with proper alignment.

Another problem is that the actuator arm is fitted tightly between the fixed pivot point and a pinion which itself is fitted on the end of an actuator motor shaft to drive the actuator arm. This pinion, although designed to be perfectly round, always contains some tolerances which make it oval or otherwise not perfectly circular. This non-circularity causes the actuator arm to be pinched between the fixed pivot point and the pinion. The non-circularity also produces extraneous slack between a gear section of the actuator arm and the pinion, leading to premature wear of the gear section. Both of these conditions, i.e. pinching and slack, have deleterious effects on the actuator arm by inducing undesirable stress and wear. The effects of a non-circular pinion are generally referred to as run out.

Attempts to compensate for the effects of run out include those disclosed in US-A-4,854,579 and EP-A-314515. In this configuration, an actuator arm and a drive motor pinion are biased into engagement by a spring force exerted directly along the axis of an elongated actuator arm. Although this configuration relieves some of the problems induced by a rigidly fixed pivot point, the arrangement is still plagued by the effects of run out and is hampered by friction and wear of its plurality of parts. Furthermore, the configuration is more susceptible to the effects of differential thermal expansion.

A second attempt to compensate for the effects of run out has been to provide a leaf spring on one side of a pivot point, generally perpendicular to the longitudinal axis of an actuator arm.

There are also several undesirable aspects induced by the leaf spring mechanism. The tolerance of the spring steel used to create the leaf spring is very hard to maintain within critical limitations. As a result, the pre-load on the actuator arm varies. Furthermore, since the leaf spring contains a certain amount of twist, a cantilever spring is required to keep the actuator arm from rising vertically. Moreover, mounting the leaf spring to the pivot mechanism requires high precision spot welding which is both time consuming and expensive.

A further attempt to compensate for the effects of run out is shown in US-A-4881140 where a strip spring is used to bias an actuator arm against a drive motor pinion.

The present invention seeks to provide a disk drive pivot mechanism having a constant pre-load, regardless of the shape of the pinion; a disk drive pivot mechanism which is fixed along a critical axis to prevent mis-alignment, yet compensates for run out, thermal expansion and similar phenomena; a disk drive pivot mechanism which is simple to manufacture, install and test; and a disk drive pivot mechanism which has a hard pivot contact and is, therefore, not susceptible to resonance.

According to the present invention there is provided a rotary actuator head positioning apparatus for a disk drive having a housing comprising: an arm assembly; drive means coupled to a driven end of said arm assembly for moving a transducer mounted to said arm assembly across a disk shaped recording medium to read and write to said recording medium; characterised by further comprising pivot arm means one end of which is pivotally connected to said arm assembly opposite said driven end and the other end of which has a fixed pivot connection to said housing, said pivotal connection to said arm assembly being fixed axially; and pre-load means for biasing said pivot arm means so that said arm assembly is held in driving relationship with said drive means.

In this case, motor means many be provided for driving said drive means, said motor means comprising a stepper motor having a drive shaft extending through a base plate of said housing.

Said motor means may comprise a stepper motor having a drive shaft extending through a base plate of said housing, and means for coupling said shaft to the driven end of said arm assembly to position the latter and thereby said transducer.

Pinion means may be provided on said shaft and a gear sector on the driven end of said arm assembly, said pre-load means biasing said gear sector in contact with said pinion means.

Preferably said pivot arm means extend substantially at right angles to and is pivotally coupled to said one end of said arm assembly, said pre-load means being coupled to said pivot arm means at a point spaced from said arm assembly.

Pinion means may be provided on said shaft and a gear sector on an end of said arm assembly, said pre-load means biasing said gear sector in contact with said pinion means so that said motor means can position said transducer by positioning said arm assembly.

Preferably said pre-load means comprises a coil spring having one end attached to said pivot arm means and its other end attached to said housing.

In one embodiment said coil spring extends substantially parallel to the long axis of said arm assembly.

Preferably an end of said pivot arm means distal from said one end of said arm assembly is pivotally supported so that said pre-load means biases said gear sector into contact with said pinion means.

The invention is defined in the appended claims. The preamble of claim 1 is based on EP-A-314 515.

The invention is illustrated, merely by way of example, in the accompanying drawings, in which:-
Figure 1 is a top view of a dual pivot apparatus according to the present invention for a disk drive; and
Figure 2 is a perspective view of a pivot arm of the dual pivot apparatus of Figure 1.

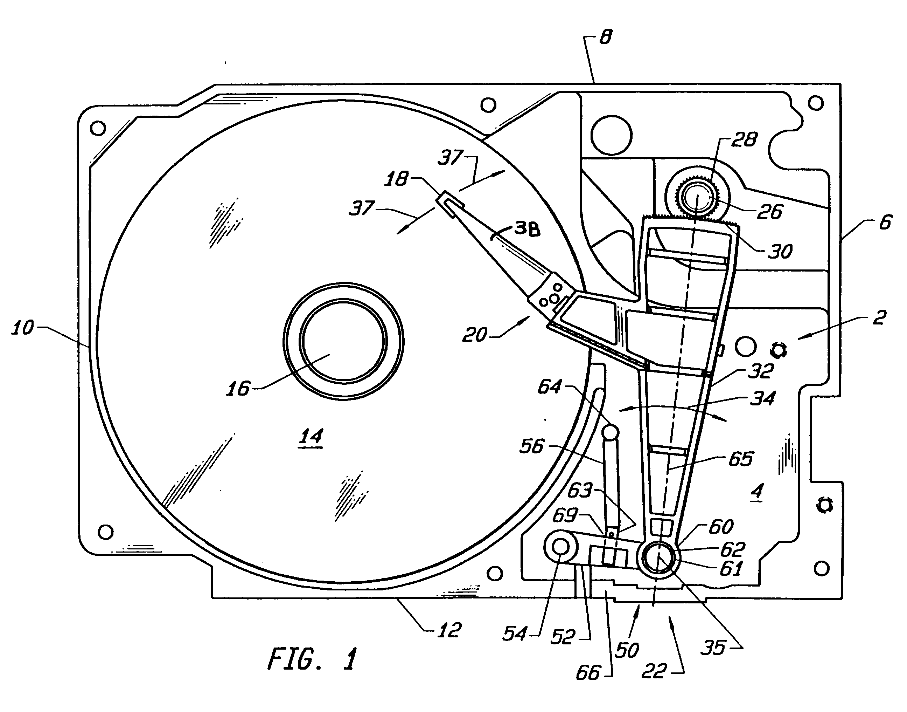

Referring to Figure 1, the major elements of the disk drive are shown including a housing 2 having a base plate 4 and upright walls 6, 8, 10, 12. The integral casting for the base of the disk drive is generally well known.

A data storage disk 14 is mounted within the housing and rotates on a spindle 16. A transducer or head 18 is provided for reading and writing data on the disk 14. The head 18 is positioned using an elongate actuator arm assembly 20. The arm assembly 20 pivots around a biasing mounting mechanism 22, including an arm pre-load device described in detail below. This pivoting movement of the arm assembly 20 is caused by rotation of an actuator motor (not shown) mounted beneath the base plate 4, having a shaft 26 extending up through the base plate 4. The shaft 26 has a pinion 28 machined thereon to mesh with a gear sector 30 on an end of an actuator arm 32. Rotation of the pinion 28 across the face of the gear sector 30 causes movement of the arm assembly 20 generally along the arc illustrated by arrow 34. As the actuator arm 32 moves, it pivots about a pivot point 35 to move the head 18 supported on an end of a flexure 38 extending from the side of the actuator arm 32 from track to track along an arc 37.

A dual pivot mechanism 50 is comprised of the axially fixed pivot point 35, a pivot lever 52, a pivot lever shaft 54 and a pre-load spring 56. The dual pivot mechanism 50 is configured to provide a constant pre-load on the actuator arm 32 along an axis 65 so that the teeth which form the gear sector 30 on the end of the actuator arm 32 are held in constant contact with the pinion 28. This is accomplished by providing the axially fixed pivot point 35 for the actuator arm 32, i.e. the pivot point is maintained on the axis 65 of the actuator arm, so that mis-tracking of the head 18 does not occur. The gear sector 30 is located distal the axially fixed pivot point 35.

The spring rate of the pre-load spring 56, which biases the gear sector 30 to the the pinion 28, is such that it provides for the run out of the non-circular configuration of the pinion while maintaining the gear sector 30 of the actuator arm 32 in constant contact with the pinion 28. This advantage is obtained without inducing unnecessary stress or wear on the actuator or pivot mechanisms. Particularly, in this configuration, pinching of the actuator arm between the pinion 28 and the pivot point 35 is alleviated.

The end of the actuator arm 32 closest the pivot point 35 contains a shaft receptor 60. The shaft receptor 60 is basically a cylindrical receptor having an cylindrical opening there-through for joining to a primary pivot shaft 62 of the pivot lever arm 52. The shaft receptor 60 has a plurality of ball bearings therein so that the shaft receptor 60 may be journaled to the pivot shaft 62, while allowing the actuator arm 32 and the shaft receptor 60 to rotate freely about the pivot shaft 62. The pivot shaft 62 which extends up into the pivot receptor 60 is solidly connected to an integral part of the pivot arm 52. The pivot shaft 62 is rotatably mounted through a set of ball bearings, in a housing 61, to the pivot receptor 60 so that no lateral play or tilt occurs between the actuator arm 32 and the shaft.

The end of the pivot arm 52 distal from the actuator arm 32 is rotatably mounted or journaled about the pivot lever shaft 54 which extends up from and is an integral part of the base plate 4.

Since both the primary pivot, i.e. the actuator arm 32 pivoting on the pivot shaft 62 (of the pivot lever 52), and the secondary pivot, i.e. the pivot lever 52 pivoting on the pivot lever shaft 54, are mechanical-shaft connections, there is de minimis vertical play or tilt induced in the actuator arm 32, in contrast to the conventional leaf spring configuration. Therefore, a cantilever spring is not required to hold the actuator arm 32 and its gear sector 30 in vertical alignment with the pinion 28.

As evident from Figure 1, the pre-load spring 56 is connected to the pivot lever 52 with a connector 63. The connector 63 is basically a screw which is mounted through a hole 69 in the pivot lever 52. The screw 63 permits the tension on the pre-load spring 56 to be adjusted by adjusting the threading of the screw 63 in the hole 69.

The pre-load spring 56 is connected between the connector 63 and a mounting pin 64. The mounting pin 64 is a rigid, fixed protrusion which may either be moulded into the base plate 4 or added thereafter.

The pin 64 is located so that the pre-load spring 56 extends generally parallel to the axis 65 of the actuator arm 32, thus biasing the actuator arm 32 into contact with the pinion 28 and the shaft 26. A stopper 66 is provided to prevent the pivot lever 52 from moving too much (as a result of shock or other force) to disengage the gear section 30 from the pinion 28.

The pre-load spring 56 is a coil spring. In a preferred embodiment the spring rate is approximately 57 g/cm (145 grams per inch) +/- 5%. Ideal spring characteristics include a low spring rate which means a relatively constant spring force over a broad length of expansion.

In this configuration, the pivot point 35 remains fixed along the axis 65 of the actuator arm 32. Maintaining the pivot point on the axis is essential to keep the head 18 on the designated track and thus to facilitate accurate reading and writing of information to the disk 14. Although the pivot point 35 of the actuator arm 32 may move along the axis 65 in response to run out, thermal expansion and shock, it will not significantly move out of the axis 65. The use of a coil spring as the preferred pre-load spring 56 as opposed to a leaf spring provides for a much greater degree of control in the amount of pre-load (or biasing) since the tolerances of coil springs are much more readily controlled. Additionally, the installation of coil springs is much easier than leaf springs since coil springs do not have to be welded into place.

Additional advantages include the utilisation of less expensive materials, less expensive tooling, decrease assembly man power and no adjusting of pre-load force, as required in known apparatus.

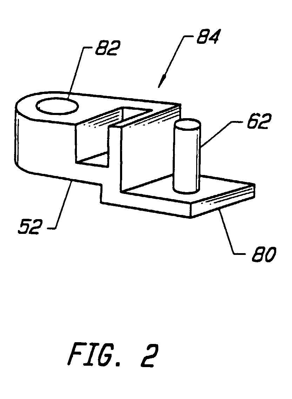

Figure 2 is a perspective view of the pivot lever 52. The physical characteristics of the pivot lever illustrate how the attachments are made (1) between the actuator arm 32 and the pivot lever 52 and (2) between the pivot lever 52 and the pivot lever shaft 54 which is fixed to the base plate 4 for securing the position of the gear sector 30.

The pivot lever 52 has a bottom plate 80 which extends below the main portion of the pivot arm 52 into a recess (not shown) in the base plate 4. The recess in the base plate 4 for the bottom plate 80 is large enough and deep enough to accommodate the thickness of the bottom plate 80 and its range of motion under normal operation. The pivot shaft 62 extends upwards from the bottom plate 80 to penetrate the pivot receptor 60 (of Figure 1) thereby rotatably mounting the pivot receptor 60 and the actuator arm 32 for rotation there-about.

The other end of the pivot lever 52 contains a cylindrical opening which is referred to as a pivot receptor 82. The pivot receptor 82 receives the pivot lever shaft 54 (of Figure 1) in much the same manner as the pivot receptor 60 receives the pivot shaft 62. The pivot arrangement permits the pivot lever 52 to pivot in a plane, but prevents tilt from being induced into the pivot lever 52. A pivot lever arm 52 without tilt facilitates an actuator arm 32 without tilt, which produces a head 18 that is aligned with the tracks on the disk 14.

A region 84 is provided in the pivot lever arm 52 for the connector 63. The connector 63 is threaded through the hole 69 to connect the spring 56 to the pivot lever, although obviously many other expedients for attaching the pre-load spring 56 to the pivot lever 52 are available.

## Claims

1. A rotary actuator head positioning apparatus for a disk drive having a housing (2) comprising: an arm assembly (32); drive means coupled to a driven end of said arm assembly for moving a transducer (18) mounted to said arm assembly across a disk shaped recording medium (14) to read and write to said recording medium; characterised by further comprising pivot arm means (52) one end of which is pivotally connected to said arm assembly (32) opposite said driven end and the other end of which has a fixed pivot connection (54) to said housing (2), said pivotal connection to said arm assembly being fixed axially; and pre-load means (56) for biasing said pivot arm means (52) so that said arm assembly (32) is held in driving relationship with said drive means.

2. Apparatus as claimed in claim 1, characterised in that the apparatus is located within said housing and a transducer mounting arm (38) extends to one side of said arm assembly (32) and over said disk.

3. Apparatus as claimed in claim 1 or claim 2, characterised in that the axially fixed pivotal connection between the pivot arm means and arm assembly is on a long axis (65) of said arm assembly.

4. Apparatus as claimed in any preceding claim in which the pivot arm means is connected to said arm assembly so that it pivots in a fixed plane.

5. Apparatus as claimed in any preceding claim, characterised in that said preload means is positioned generally parallel to a long axis (65) of the arm assembly (32) to maintain the arm assembly in driving relationship with the drive means.

6. Apparatus as claimed in any preceding claim, characterised in that said drive means comprises a stepper motor having a drive shaft (26) extending through a base plate (4) of said housing (2), and means (28, 30) for coupling said shaft to the driven end of said arm assembly (32) to position the latter and thereby said transducer (18).

7. Apparatus as claimed in claim 6, characterised in that pinion means (28) is provided on said shaft (26) and a gear sector (30) on the driven end of said arm assembly (32), said pre-load means (56) biasing said gear sector (30) in contact with said pinion means (28).

8. Apparatus as claimed in any preceding claim, characterised in that said pivot arm means (52) extend substantially at right angles to said arm assembly (32), said pre-load means (56) being coupled to said pivot arm means (52) at a point spaced between said arm assembly and said pivot connection.

9. Apparatus as claimed in any preceding claim, characterised in that said pre-load means (56) comprises a coil spring having one end attached to said pivot arm means (52) and its other end attached to said housing (2).

10. Apparatus as claimed in claim 9, characterised in that said coil spring extends substantially parallel to the long axis (65) of said arm assembly.

11. Apparatus as claimed in any preceding claim, characterised in that an end of said pivot arm means (52) distal from said one end of said arm assembly (32) is pivotally supported so that said pre-load means (56) biases said gear sector (30) into contact with said pinion means (28).

## Patentansprüche

1. Kopfpositioniervorrichtung mit einem drehbaren Stellglied für ein Plattenlaufwerk mit einem Gehäuse (2), die eine Armbaugruppe (32) und eine mit einem angetriebenen Ende der Armbau gruppe gekoppelte Antriebseinrichtung zur Bewegung eines auf der Armbaugruppe befestigten Wandlers (18) über ein plattenförmiges Aufzeichnungsmedium (14) umfaßt, um von dem Aufzeichnungsmedium zu lesen und auf dieses zu schreiben,
dadurch gekennzeichnet, daß weiterhin eine Schwenkarmeinrichtung (52), deren eines Ende schwenkbar mit der Armbaugruppe (32) entgegengesetzt zu dem angetriebenen Ende verbunden ist und deren anderes Ende eine feste Schwenkverbindung (54) mit dem Gehäuse (2) aufweist, wobei die Schwenkverbindung mit der Armbaugruppe in Axialrichtung festgelegt ist, und eine Vorspanneinrichtung (56) zur Vorspannung der Schwenkarmeinrichtung (52) vorgesehen ist, so daß die Armbaugruppe (32) in Antriebsbeziehung mit der Antriebseinrichtung gehalten wird.

2. Vorrichtung nach Anspruch 1,
dadurch gekennzeichnet, daß die Vorrichtung in dem Gehäuse angeordnet ist, und daß sich ein Wandler-Befestigungsarm (58) zu einer Seite der Armbaugruppe (32) und über die Platte erstreckt.

3. Vorrichtung nach Anspruch 1 oder 2,
dadurch gekennzeichnet, daß die axial festgelegte Schwenkverbindung zwischen der Schwekarmeinrichtung und der Armbaugruppe auf einer langen Achse (65) der Armbaugruppe liegt.

4. Vorrichtung nach einem der vorhergehenden Ansprüche, bei der die Schwenkarmeinrichtung mit der Armbaugruppe derart verbunden ist, daß sie in einer festen Ebene verschwenkt.

5. Vorrichtung nach einem der vorhergehenden Ansprüche,
dadurch gekennzeichnet, daß die Vorspanneinrichtung allgemein parallel zu einer langen Achse (65) der Armbaugruppe (32) angeordnet ist, um die Armbaugruppe in Antriebsbeziehung mit der Antriebseinrichtung zu halten.

6. Vorrichtung nach einem der vorhergehenden Ansprüche,
dadurch gekennzeichnet, daß die Antriebseinrichtung einen Schrittmotor mit einer Antriebswelle (26), die sich durch eine Grundplatte (4) des Gehäuses (2) erstreckt, und Einrichtungen (28, 30) zum Koppeln der Welle mit dem angetriebenen Ende der Armbaugruppe (32) umfaßt, um die letztere und damit den Wandler (18) zu positionieren.

7. Vorrichtung nach Anspruch 6,
dadurch gekennzeichnet, daß eine Ritzeleinrichtung (28) auf der Welle (26) und ein Zahnradsektor (30) auf dem angetriebenen Ende der Armbaugruppe (32) vorgesehen sind, und daß die Vorspanneinrichtung (26) den Zahnradseektor (30) in Kontakt mit der Ritzeleinrichtung (28) vorspannt.

8. Vorrichtung nach einem der vorhergehenden Ansprüche,
dadurch gekennzeichnet, daß die Schwenkarmeinrichtung (32) sich im wesentlichen unter rechten Winkeln zur Armbaugruppe (32) erstreckt, und daß die Vorspanneinrichtung (56) mit der Schwenkarmeinrichtung (52) an einem Punkt gekoppelt ist, der mit Abstand zwischen der Armbaugruppe und der Schwenkverbindung angeordnet ist.

9. Vorrichtung nach einem der vorhergehenden Ansprüche,
dadurch gekennzeichnet, daß die Vorspanneinrichtung (56) eine Schraubenfeder umfaßt, deren eines Ende an der Schwenkarmeinrichtung (52) befestigt ist und deren anderes Ende an dem Gehäuse (2) befestigt ist.

10. Vorrichtung nach Anspruch 9,
dadurch gekennzeichnet, daß sich die Schraubenfeder im wesentlichen parallel zur langen Achse (65) der Armbaugruppe erstreckt.

11. Vorrichtung nach einem der vorhergehenden Ansprüche,
dadurch gekennzeichnet, daß ein von dem einen Ende der Armbaugruppe (32) entferntes Ende der Schwenkarmeinrichtung (52) schwenkbar gelagert ist, so daß die Vorspanneinrichtung (56) den Zahnradsektor (30) in Kontakt mit der Ritzeleinrichtung (28) vorspannt.

## Revendications

1. Dispositif de positionnement de tête d'actionneur rotatif pour une unité de disque comportant un boîtier (2) comprenant: un ensemble formant bras (32); des moyens d'entraînement couplés à une extrémité menée dudit ensemble de bras pour actionner un capteur (18) monté sur ledit ensemble formant bras sur un support d'enregistrement en forme de disque (14) pour lire et écrire sur ledit support d'enregistrement; caractérisé en ce qu'il comprend en outre des moyens formant bras de pivotement (52) dont une extrémité est raccordée, avec la possibilité de pivoter, audit ensemble formant bras (32) à l'opposé de ladite extrémité menée et dont l'autre extrémité est raccordée par un axe de rotation fixe (54) audit boîtier (2), ledit raccordement pivotant audit ensemble formant bras étant fixe dans le plan axial; et des moyens de précontrainte (56) pour déplacer lesdits moyens formant bras de pivotement (52) de telle façon que ledit ensemble formant bras (32) soit maintenu en relation d'entraînement avec lesdits moyens d'entraînement.

2. Dispositif selon la revendication 1, caractérisé en ce que le dispositif est placé à l'intérieur dudit boîtier et en ce qu'un bras de montage du capteur (38) s'étend sur un côté dudit ensemble formant bras (32) et au-dessus dudit disque.

3. Dispositif selon la revendication ou la revendication 2, caractérisé en ce que ledit raccordement pivotant fixe axial entre les moyens formant bras de pivotement et l'ensemble formant bras se situe sur l'axe longitudinal (65) dudit ensemble formant bras.

4. Dispositif selon l'une quelconque des revendications précédentes, dans lequel lesdits moyens formant bras de pivotement sont reliés audit ensemble formant bras de telle façon qu'ils pivotent dans un plan fixe.

5. Dispositif selon l'une quelconque des revendications précédentes, caractérisé en ce que lesdits moyens de précontrainte sont positionnés généralement parallèlement à l'axe longitudinal (65) de l'ensemble formant bras (32) pour maintenir l'ensemble formant bras dans une relation d'entraînement avec les moyens d'entraînement.

6. Dispositif selon l'une quelconque des revendications précédentes, caractérisé en ce que lesdits moyens d'entraînement comprennent un moteur pas à pas comportant un arbre d'entraînement (26) traversant une plaque de base (4) dudit boîtier (2) et des moyens (28, 30) pour accoupler ledit arbre à l'extrémité menée dudit ensemble formant bras (32) pour positionner ce dernier et, ce faisant, ledit capteur (18).

7. Dispositif selon la revendication 6, caractérisé en ce que des moyens formant pignon (28) sont prévus sur ledit arbre (26) et un secteur denté (30) sur l'extrémité menée dudit ensemble formant bras (32), lesdits moyens de précontrainte (56) appliquant ledit secteur denté (30) pour l'amener en contact avec lesdits moyens formant pignon (28).

8. Dispositif selon l'une quelconque des revendications précédentes, caractérisé en ce que lesdits moyens formant bras de pivotement (52) s'étendent sensiblement à angle droit par rapport audit ensemble formant bras (32), lesdits moyens de précontrainte (56) étant accouplés auxdits moyens formant bras de pivotement (52) en un point se situant entre ledit ensemble formant bras et ledit raccordement par axe de rotation.

9. Dispositif selon l'une quelconque des revendications précédentes, caractérisé en ce que lesdits moyens de précontrainte (56) comprennent un ressort hélicoïdal, dont une extrémité est fixée auxdits moyens formant bras de pivotement (52) et l'autre extrémité est fixée audit boîtier (2).

10. Dispositif selon la revendication 9, caractérisé en ce que ledit ressort hélicoïdal s'étend sensiblement parallèlement à l'axe longitudinal (65) dudit ensemble formant bras.

11. Dispositif selon l'une quelconque des revendications précédentes, caractérisé en ce qu'une extrémité desdits moyens formant bras de pivotement (52) éloignée d'une desdites extrémités dudit ensemble formant bras (32) est supportée, avec la possibilité de pivoter, de telle façon que lesdits moyens de précontrainte (56) appliquent ledit secteur denté (30) pour l'amener en contact avec lesdits moyens formant pignon (28).
